Europäisches Patentamt

European Patent Office

Office européen des brevets

(11) Veröffentlichungsnummer: **0 248 097 B1**

# (12) EUROPÄISCHE PATENTSCHRIFT

(45) Veröffentlichungstag der Patentschrift: 20.02.91

(51) Int. Cl.5: **G01P 5/00**

(21) Anmeldenummer: **86107466.4**

(22) Anmeldetag: **02.06.86**

(54) **Verfahren zur Bestimmung der Horizontal-Eigengeschwindigkeit von Hubschraubern in höheren Geschwindigkeitsbereichen.**

(43) Veröffentlichungstag der Anmeldung:
09.12.87 Patentblatt 87/50

(45) Bekanntmachung des Hinweises auf die Patenterteilung:
20.02.91 Patentblatt 91/08

(84) Benannte Vertragsstaaten:
**AT BE CH DE FR GB IT LI LU NL SE**

(56) Entgegenhaltungen:
**EP-A- 0 094 778**
**GB-A- 2 037 688**

(73) Patentinhaber: **LITEF GmbH**
**Lörracher Strasse 18**
**D-7800 Freiburg/Br.(DE)**

(72) Erfinder: **Hassenpflug, Wolfgang**
**Reutestrasse 2**
**D-7800 Freiburg i. Br.(DE)**
Erfinder: **Schwäble, Rainer, Dr.**
**Belchenstrasse 18**
**D-7812 Bad Krozingen(DE)**

(74) Vertreter: **TER MEER - MÜLLER - STEINMEI-STER & PARTNER**
**Mauerkircherstrasse 45**
**D-8000 München 80(DE)**

**Beschreibung**

Gegenstand der Erfindung ist ein Verfahren zur Bestimmung der Horizontal-Eigengeschwindigkeit $v_e$ von Hubschraubern in höheren Geschwindigkeitsbereichen, d. h. in Geschwindigkeitsbereichen $v_e > 20$ m/s.

Mit der europäischen Patentanmeldung Nr. 85 107 190.2 wurde bereits ein analytisches Berechnungsverfahren zur Bestimmung der Hubschraubereigengeschwindigkeit in Geschwindigkeitsbereichen unterhalb 20 m/s vorgeschlagen. Dieses vorgeschlagene Verfahren hat gegenüber allen bisher bekannten Meßverfahren beispielsweise dem in 6B-A-2037688 beschrießenen Meß-und Berechnungsverfahren, insbesondere gegenüber solchen, der mit Pitot-Statikrohren und einer um zwei Achsen drehbaren Sonde arbeiten, den großen Vorteil, daß kein Außenfühler benötigt wird, der leicht beschädigt oder durch Fremdeinwirkung völlig ausfallen kann. Außerdem benötigen Pitot-Statikrohre eine relativ hohe Leistung (Heizung) und stellen mit den notwendigen Meßwertumformern außerdem einen beträchtlichen Gewichtsfaktor dar. Einzige Voraussetzung bei dem vorgeschlagenen Verfahren ist die Bestückung der Steuerorgane mit Meßwertgebern. Auf den Inhalt der erwähnten europäischen Patentanmeldung wird Bezug genommen.

Der Erfindung liegt die Aufgabe zugrunde, ein analytisches Verfahren zur Bestimmung der Horizontal-Eigengeschwindigkeit von Hubschraubern in höheren Geschwindigkeitsbereichen, d.h. in Bereichen $v_e > 20$ m/s, anzugeben.

Das erfindungsgemäße Verfahren ist im Patentanspruch 1 angegeben und die abhängigen Patentansprüche kennzeichnen vorteilhafte Ergänzungen des zugrundeliegenden Erfindungsgedankens.

Die Erfindung geht von der Überlegung aus, daß es mindestens in einem wesentlichen Bereich des Hubschrauberleistungsprofils möglich sein könnte, die Eigengeschwindigkeit des Hubschraubers aus dem zu messenden Nickwinkel analytisch zu ermitteln.

Unter der Voraussetzung, daß auch im Bereich "normaler" Geschwindigkeit ($v_e > 20$ m/s) eine analytische Lösung existiert, könnte als besonderer Vorteil dann auf die konventionelle Differenzdruckmessung zur Geschwindigkeitsbestimmung völlig verzichtet werden.

Im folgenden wird zunächst ausgehend vom charakteristischen Schwingungsverhalten eines Hubschraubers ein Modell für höhere bis hohe Geschwindigkeiten vorgestellt. Anschließend werden die Ergebnisse eines Modellversuchs unter Verwendung eines bekannten Luftdatensystems als Referenz dargestellt. Die Ergebnisse zeigen, daß sich mit der erfindungsgemäßen Lösung die Horizontal-Eigengeschwindigkeit im Bereich $v_e > 20$ m/s mit einer Genauigkeit von $\pm 2$ m/s ($2 \sigma$) bestimmen läßt.

Theoretische Vorbetrachtungen

Die Grundgleichung für die Nickbewegung eines Hubschraubers lautet (vgl. Shape, N.K., "A Study of the Dynamic Motions of Hingeless Rotored Helicopters", New Jersey (USA), 1970 und Payne, P.R., "Helicopter Dynamics and Aerodynamics", Pitman & Sons, London 1959):

$$I_L \ddot{\theta} = F_s h \alpha + M \qquad (1.1a)$$

mit

$I_L$: Trägheitsmoment des Hubschraubers, bezogen auf die Körperquerachse
$\theta$: Nickwinkel
$F_s$: Rotorschub
$\alpha$: Neigung der Rotorebene
$h$: Abstand zwischen Rotorschwerpunkt und Hubschrauberschwerpunkt
$M$: nichtkompensiertes Störmoment

Aus der Projektion von $F_s$ auf die Längsachse ergibt sich die Längskraft

$$-F_s (\theta + \alpha) = m \dot{v}_x + F_w \qquad (1.1b)$$

worin $F_w$ den Windwiderstand bezeichnet.

Bezieht man die Gleichungen (1.1a) und (1.1b) auf einen bekannten Ausgangszustand und betrachtet nur noch die Abweichungen, so gilt

$$I_L \, \Delta\dot{\Theta}^{\cdot} = F_S \cdot h \cdot \Delta\alpha \qquad\qquad (1.2a)$$

$$-F_S(\Delta\Theta + \Delta\alpha) = m\Delta\dot{v}_x + \Delta F_w \qquad\qquad (1.2b)$$

Der Winkel $\Delta\alpha$ hängt von der Steuereingabe $\delta_x$, der Längsgeschwindigkeit $V_x$ sowie der Nickgeschwindigkeit $\dot{\Theta}$ ab. Nach Linearisierung ergibt sich ein entsprechender Summenausdruck:

$$\Delta\alpha = c_v \Delta v_x + c_{\dot{\Theta}} \Delta\dot{\Theta} - D_{\delta x} \Delta\delta_x \qquad\qquad (1.3)$$

$$c_v = \frac{\partial\alpha}{\partial v_x}$$

$$c_{\dot{\Theta}} = \frac{\partial\alpha}{\partial\dot{\Theta}}$$

$$D_{\delta x}: \text{ Steuer-Übertragungskoeffizient}$$

Einsetzen von (1.3) in (1.2) liefert

$$I_L \Delta\dot{\Theta}^{\cdot} - M_{\dot{\Theta}} \Delta\dot{\Theta} - M_v \Delta v_x = M_{\delta x} \Delta\delta x \qquad\qquad (1.4a)$$

und die Näherung

$$\Delta F_w + m\Delta\dot{v}_x - D_v \Delta v_x = -F_S \Delta\Theta, \qquad\qquad (1.4b)$$

wobei

$$M_{\dot{\Theta}} = F_S \cdot h \cdot c_{\dot{\Theta}} \quad \text{Längsneigungsdämpfung}$$

$$M_v = F_S \cdot h \cdot c_v \quad \text{Geschwindigkeitsstabilität}$$

$$M_{\delta x} = -F_S \cdot h \cdot D_{\delta x} \quad \text{Wirksamkeit der Längssteuerung}$$

$$D_v = -F_S \cdot c_v \quad \text{Vorwärtsdämpfung}$$

Im letzten Schritt substituiert man $\Delta V_x$ in (1.4a) durch (1.4b) und gelangt damit zur Darstellung

$$I_L \Delta\ddot{\Theta}^{\cdot} - M_{\dot{\Theta}} \Delta\dot{\Theta} + hF_S \Delta\Theta = M_{\delta x} \Delta\delta_x - h\Delta F_w - h \cdot m\Delta\dot{v}_x. \quad (1.5)$$

Es handelt sich dabei um eine inhomogene Differentialgleichung 2ter Ordnung, deren linker Teil das Nickschwingverhalten des Hubschraubers charakterisiert. Die Störfunktion auf der rechten Seite besteht aus drei Termen. Zwei von diesen, $-h\Delta F_w$ und $-hm\Delta v_x$, kennzeichnen die äußeren Störungen, hervorgerufen durch Windschwankungen, während das Glied $M_{\delta x}\Delta\delta_x$ den Einfluß der Längssteuerung darstellt.

Zur weiteren Erläuterung des Erfindungsgedankens sowie von Ausführungsbeispielen wird nachfolgend auf beigefügte Zeichnungen Bezug genommen. Es zeigen:

Fig. 1 in schematischer Darstellung den Verlauf eines Hubschrauberleistungsprofils;

Fig. 2        ein Vektordiagramm zur Erläuterung der an einem Hubschrauber wirkenden Längskräfte im stationären Vorwärtsflug;

Fig. 3        den zeitlichen Verlauf der Nickbewegung und des gegenläufigen Steuersignals eines Hubschraubers im quasi-stationären Flug;

Fig. 4        das Blockschaltbild zur Bestimmung der Horizontal-Eigengeschwindigkeit eines Hubschraubers gemäß dem erfindungsgemäßen Verfahren ausgehend von der meßtechnischen Erfassung des Nickwinkels und des Steuersignals;

Fig. 5        die graphische Darstellung des Verlaufs des Nickwinkels in Abhängigkeit von der Geschwindigkeit;

Fig. 6        die graphische Darstellung des Steuerausschlagsignals in Abhängigkeit von der Geschwindigkeit; und

Fig. 7 und 8    veranschaulichen die Resultate von Flugversuchen, bei denen die Horizontal-Eigengeschwindigkeit nach dem erfindungsgemäßen Verfahren im Vergleich zu einer herkömmlichen Luftdatenmessung bestimmt wurde.

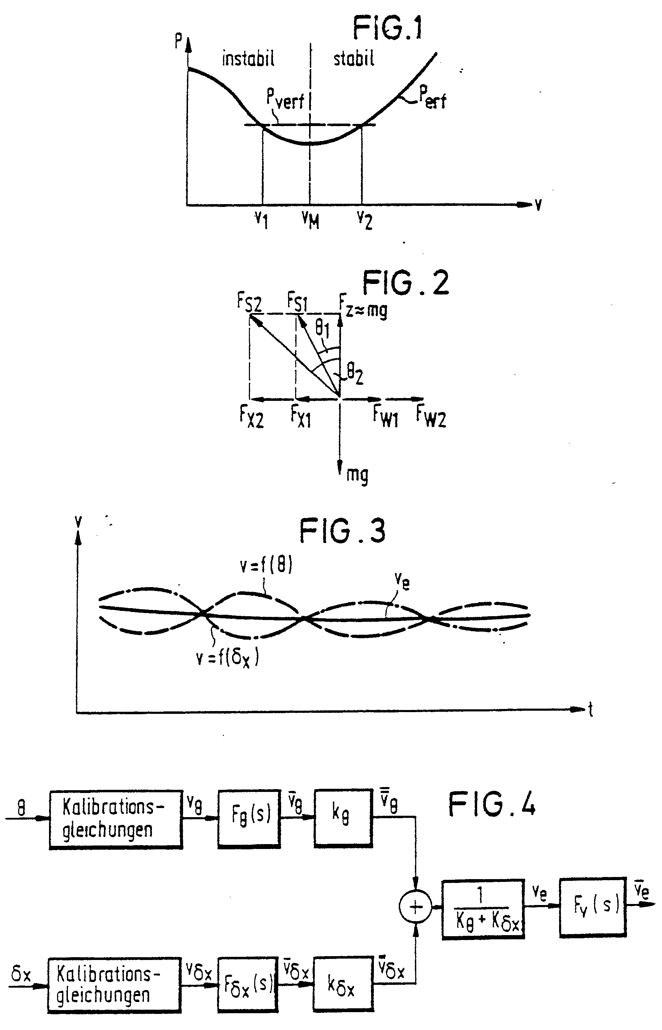

Die Stabilitätsbedingungen lassen sich am Beispiel eines Hubschrauberleistungsprofils aufzeigen (Fig. 1). Dieses beschreibt näherungsweise eine Parabel mit einem Minimum bei $v_m \approx v_{max}/2$. Gibt man nun eine ganz bestimmte verfügbare Leistung vor, so existieren exakt zwei Geschwindigkeiten $v_1$ und $v_2$, bei denen sich der Hubschrauber im Gleichgewichtszustand befindet. Zunächst nehme man an, der Hubschrauber erfahre im Stationärflug mit $v_2$ eine Windstörung. Je nach Vorzeichen der Störung bedeutet dies Anstieg oder Verminderung der erforderlichen Leistung. Im ersten Falle zeigt der Hubschrauber die Tendenz, den alten Zustand wieder herzustellen, da keine Leistungsreserve zur Verfügung steht. Im zweiten Falle bewirkt der Leistungsüberschuß ein Anwachsen der Geschwindigkeit, bis $v_2$ ebenfalls wieder erreicht ist. Daraus kann unmittelbar abgelesen werden, daß das Schwingungsverhalten des Systems (Gleichung 1.5) für $v > v_M$ stabil ist. Der Pilot greift in beiden Fällen korrigierend mit dem Längssteuer ein, um zu große Ausschläge in der Längsneigung zu vermeiden.

Im Geschwindigkeitsbereich $v < v_M$ liegen andere Bedingungen vor. Übersteigt dort die verfügbare Leistung die erforderliche, so beschleunigt der Hubschrauber aufgrund des wachsenden Leistungsüberschusses immer weiter, bis die Gleichgewichtslage $v_2$ erreicht ist. Hier erfolgt also keine selbständige Rückführung in den Ausgangszustand, statt dessen eskaliert die Störung. Der gleiche Effekt stellt sich bei Vorzeichenumkehr ein, d. h. bei Unterschreiten der notwendigen Leistung. In diesem Fall verringert sich die Geschwindigkeit fortschreitend, sofern der Pilot die Störbewegung nicht durch Gegenlenken abfängt. Bei Geschwindigkeiten unterhalb $v_M$ herrscht folglich Instabilität.

Als wesentliches Ergebnis dieser Betrachtungen ist festzuhalten, daß windinduzierte Störungen in jeder Fluglage durch sofortiges Gegensteuern kompensiert werden.

Ein Modell nach dem erfindungsgemäßen Verfahren zur Bestimmung von Hubschrauber-Eigengeschwindigkeiten $v_e > 20$ m/s wird nachfolgend näher erläutert.

Im stationären Horizontalflug wirkt näherungsweise die Längskraft

$$F_s \bullet \sin\theta = F_w \quad (2.1)$$

$\theta$ bezeichnet den Nickwinkel und ist bis auf geringe Vernachlässigungen identisch mit dem Winkel, um den die Schubkomponente $F_s$ zur Überwindung des Rumpfwiderstands $F_w$ nach vorne geneigt werden muß. Der Rumpfwiderstand und folglich auch das Produkt $F_s \bullet \sin\theta$ ist eine vom Quadrat der Geschwindigkeit abhängige Variable. Da die Vertikalkomponente $F_z$ nicht mit der Horizontalgeschwindigkeit variiert, erfordert eine Längskraftänderung stets auch eine Nickwinkeländerung.

Fig. 2 macht dies für zwei unterschiedliche Geschwindigkeiten anschaulich.

Grundsätzlich scheint es also möglich zu sein, die Eigengeschwindigkeit des Hubschraubers aus dem Nickwinkel zu bestimmen.

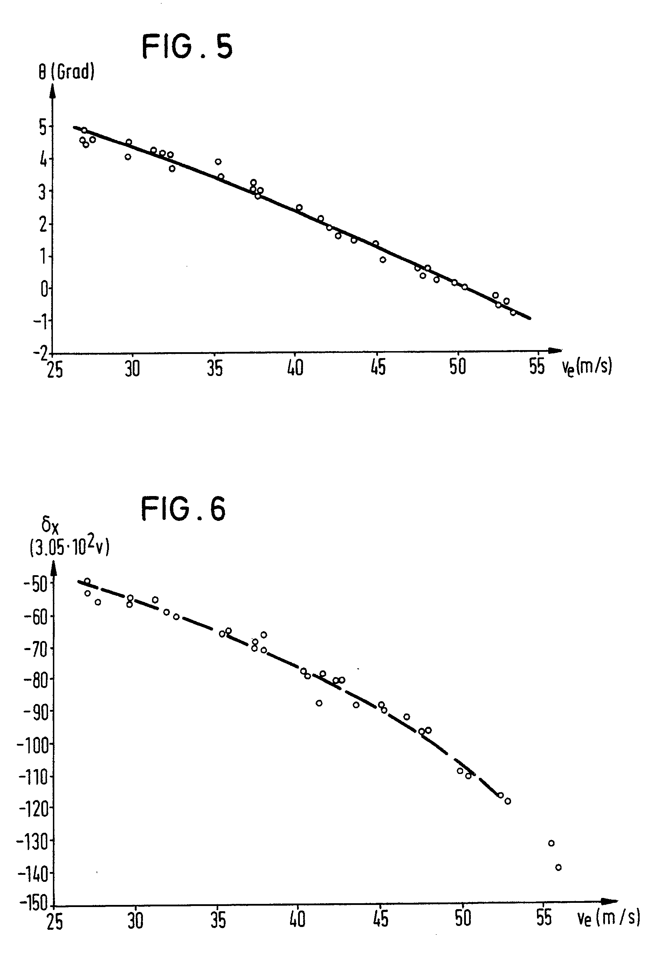

In Fig. 5 ist die Abhängigkeit zwischen den beiden Meßgrößen Nickwinkel $\theta$ und Eigengeschwindigkeit $v_e$ als Ergebnis von Flugversuchen und Messungen mit einem bekannten Hubschrauber aufgetragen. Es zeigt sich, daß die Nickwinkelempfindlichkeit unterhalb 20 m/s sehr gering ausfällt, über 20 m/s aber ausreicht, um eine eindeutige Beziehung zur Eigengeschwindigkeit $v_e$ herzustellen.

Die direkte Anwendung dieser Funktion kann allerdings nur dann brauchbare Ergebnisse liefern, wenn homogene Anströmverhältnisse vorliegen. Diese Voraussetzung entspricht jedoch nicht der Realität, vielmehr führen ständige Windstörungen zu einem Aufschaukeln der Hubschrauberbewegung gemäß Gleichung (1.5), d. h. einer Schwingung um einen mittleren Nickwinkel, der sich bei stationärem Flug einstellen würde.

Es wurde bereits ausgeführt, daß sowohl im stabilen als auch im instabilen Regime Nickbewegungen, die von Windstörungen herrühren, durch gegenläufige Steuerbewegung korrigiert werden. Da der Längssteuerausschlag zumindest für $v_e > 25$ m/s ebenfalls als Funktion von der Geschwindigkeit dargestellt

4

werden kann (Fig. 6), existiert für Längssteuer $\delta x$ und Nickbewegung $\theta$ ein gemeinsamer Maßstab, so daß die Amplituden beider Signale über entsprechende Kalibrierungsfunktionen miteinander verglichen werden können. Der Nickwinkel $\theta$ stellt zwar ein Ausgangssignal dar, während das Längssteuersignal $\delta x$ einem Eingangssignal entspricht. Die Erfahrung und messende Beobachtungen haben jedoch ergeben, daß der Pilot bei Wahrnehmung der Nickbewegung im Schwingungsrhythmus gegensteuert, was in Fig. 3 zumindest qualitativ veranschaulicht ist.

Daraus läßt sich für den stationären Flug folgende einfache Modellbetrachtung gewinnen:

$$v_e = \frac{k_\theta v_\theta + k_{\delta x} v_{\delta x}}{k_\theta + k_{\delta x}} \qquad (2.2)$$

Es bedeuten

$$\left.\begin{array}{l} v_\theta = f_\theta(\theta) \\ \\ v_{\delta x} = f_{\delta x}(\delta x) \end{array}\right\} \quad \text{Kalibrationsgleichungen}$$

$$\left.\begin{array}{l} k_\theta \\ \\ k_{\delta x} \end{array}\right\} = \text{Gewichtsfaktoren, } \textit{mittels Meßaufnehmern bestimmt,}$$

Das Längssteuersignal $\delta x$ und die Rumpfwinkellage bzw. der Nickwinkel $\theta$ werden über geeignete Meßwertaufnehmer erfaßt. Als Meßwertaufnehmer für die Rumpfwinkellage bzw. den Nickwinkel $\theta$ kommt insbesondere ein Trägheitsnavigationssystem in Frage, während das Längssteuersignal $\delta x$ mit Hilfe z.B. eines Potentiometers am Steuerhebel des Piloten erfaßt werden kann, wie dies auch bereits in der europäischen Patentanmeldung Nr. 85 107 190.2 vorgeschlagen worden ist.

Je nach Güte der Aufnehmer bzw. der A/D-Wandlung können Filterungen der einzelnen Signale erforderlich werden, so daß Gleichung (2.2) in allgemeiner Form lautet

$$v_e = f_v\left[\frac{k_\theta\, f_1(v_\theta) + k_{\delta x}\, f_2(v_{\delta x})}{k_\theta + k_{\delta x}}\right] \qquad (2.3)$$

Gemäß der Lehre des Patentanspruchs 1 und nach dem erläuterten Modell des erfindungsgemäßen Verfahrens sind also folgende, durch das Funktionsblockschaltbild der Fig. 4 veranschaulichte Verfahrensschritte zur Bestimmung der Horizontal-Eigengeschwindigkeit $v_e$ erforderlich:

1. Erfassung des Nickwinkels $\theta$ und des Längssteuersignals $\delta x$ durch geeignete Meßwertaufnehmer.
2. Berechnung äquivalenter Geschwindigkeiten $v_\theta$ und $v_{\delta x}$ aus $\theta$ bzw. $\delta x$ im Wege der Kalibrationsgleichungen $f_\theta(\theta)$ und $f_{\delta x}(\delta x)$.

3. Filterung der Signale $v_\theta$ und $v_{\delta x} \to \bar{v}_\theta,\ \bar{v}_{\delta x}$

$\left( \begin{array}{l} \text{mit } \bar{V}_\theta = f_1(V_\theta) \\ \bar{V}_{\delta x} = f_2(V_{\delta x}); \\ f_1, f_2 = \text{Filter-} \\ \text{gleichungen;} \end{array} \right.$

4. Gewichtung der Signale $\bar{v}_\theta$ und $\bar{v}_{\delta x} \to \bar{\bar{v}}_\theta,\ \bar{\bar{v}}_{\delta x}$ mittels der Koeffizienten $k_\theta$ und $k_{\delta x}$

5. Verknüpfung der Signale $\bar{v}_\theta$ und $\bar{v}_{\delta x}$ durch gewogene Mittelbildung:

$$v_e = \frac{\bar{\bar{v}}_\theta + \bar{\bar{v}}_{\delta x}}{k_\theta + k_{\delta x}}$$

In der Regel wird insbesondere in Abhängigkeit von der Güte der A/D-Wandlung auch noch eine Filterung des Signals $v_e$ erforderlich sein, so daß sich dann als Ergebnis das in Fig. 4 durch $\bar{v}_e$ gekennzeichnete Signal der Horizontal-Eigengeschwindigkeit ergibt zu: $\bar{V}_e = f_3 (Ve)$

Das erläuterte Modell des erfindungsgemäßen Verfahrens wurde in umfangreichen Versuchsreihen von Luftdaten-Testflügen mit einem Hubschrauber bekannter Aufbauart überprüft. Dabei wurde, wie bereits angedeutet, das Nickwinkelsignal $\theta$ durch ein Trägheitsnavigationssystem und das Längssteuersignal $\delta x$ mit Hilfe eines Potentiometers am Steuerhebel erfaßt. Für die erforderliche Geschwindigkeitsreferenz wurde das unter der Bezeichnung LASSIE ( L ow A ir S peed S ensing and I ndicating E quipment), Produkt der Firma GEC (Großbritannien) verwendet, das im Geschwindigkeitsbereich $v_e > 20$ m/s nahezu fehlerfrei arbeitet (vgl. Kaletka, J., "Evaluation of the Helicopter Low Airspeed System LASSIE", Rotorcraft and Powered Lift Aircraft Forum, Garmisch-Partenkirchen, 1981).

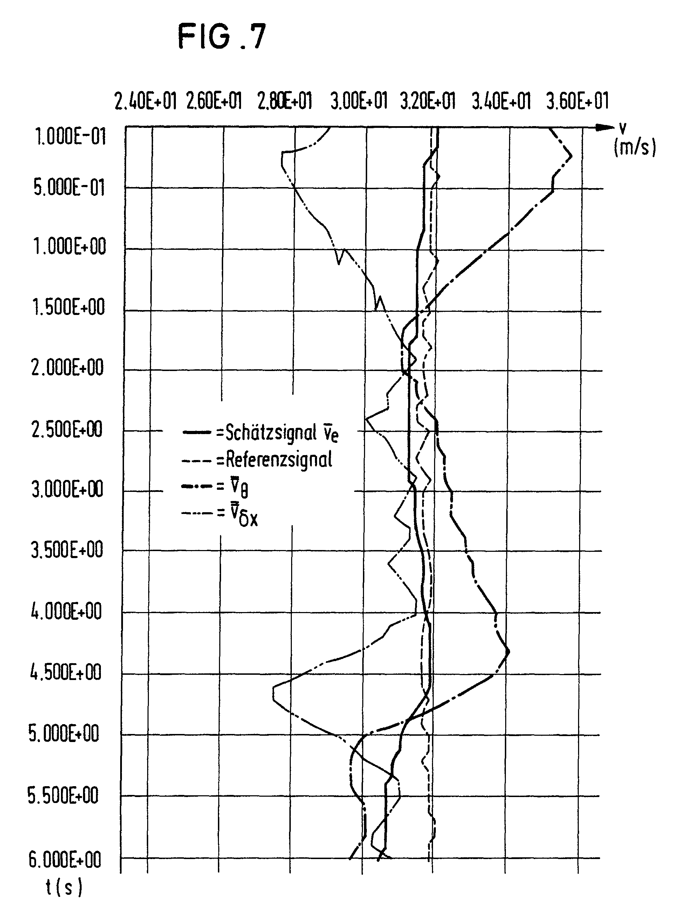

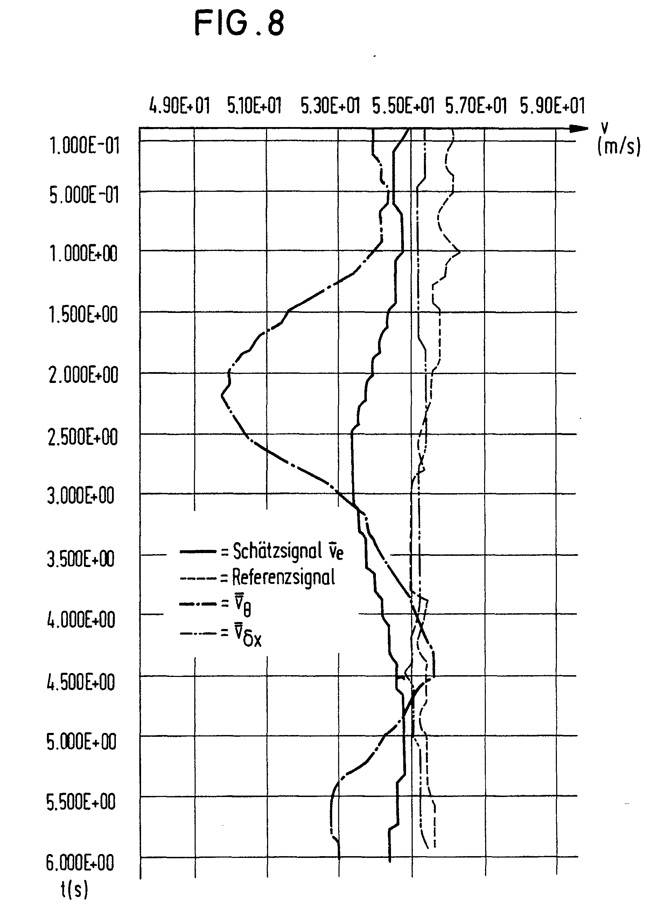

Zwei Beispiele für die bei den Testflügen erzielten umfangreichen Resultate sind in den Fig. 7 und 8 wiedergegeben.

Die Ausgangsdaten zur Ermittlung der für jeden Hubschrauber-Typ charakteristischen Kalibrationsfunktionen $v_\theta$ und $v_{\delta x}$ sind das Ergebnis einer Reihe von quasi-Stationärflügen, wobei jeweils das Mittel über ein Meßintervall von 10 bis 20 s einen Meßpunkt bildet. Bei einer Abtastfrequenz von 10 Hz stehen also jeweils 100 bis 200 Meßwerte zur Verfügung. Fig. 5 zeigt das Ergebnis der gemittelten Daten für den Nickwinkel $\theta$ und Fig. 6 die gemittelten Daten für die Steuerausschläge, also für das Längssteuersignal $\delta x$.

Die in den Fig. 5 und 6 aufgetragenen Werte beziehen sich auf folgende aktuelle Daten:

$$\rho \approx 0,144 \; \frac{kp}{m^4} s^2 \quad \text{(Dichte)} \quad oder \quad 1,41 \frac{kg}{m^3}$$

$m_H \approx 2200$ kg (Hubschraubermasse)

$\Delta x_s = +0,02$ m (vordere Schwerpunktlage)

Änderungen dieser Werte müssen über eine entsprechende Parametrisierung in den Gleichungen für $v_\theta$ und $v_{\delta x}$ berücksichtigt werden.

Im vorliegenden Fall lauten diese Gleichungen

$v_\theta = f(\theta) = a_0 + a_1 \theta + a_2 \theta^2$ (3.a)

$v_{\delta x} = f_{\delta x}(\delta_x) = b_0 + b_1 \delta_x \, b_2 \delta_x^2$ (3.b)

mit den für den bei den Versuchen verwendeten Hubschraubern charakteristischen Koeffizienten

$a_0 = 50,05$

$a_1 = -4,158$

$a_2 = -0,143$

$b_0 = -9,868$

$b_1 = -0,870$

$b_2 = -0,0029$

Unter Verwendung der Gleichung (3.a/b) und den hubschraubertypischen Zuweisungen

$$\begin{aligned} k_\theta &= 1 \\ k_{\delta x} &= 1 \end{aligned} \Bigg\} \; Gewichtungsfaktoren$$

$$F_\theta(s) = 1 \quad (\ddot{U}bertragungsfunktion \; von \; f_1 (V_\theta))$$

$$F_{\delta x}(s) = \frac{1}{1 + 0,2s} \quad (\text{Übertragungsfunktion von } f_2(v_{\delta x}))$$

$$F_v(s) = \frac{1}{1 + 0,1s} \quad (\text{Übertragungsfunktion von } f_3(v_e))$$

wurden gemäß der Erfindung, wie sie anhand der Fig. 4 erläutert wurde, die Eigengeschwindigkeit für einzelne Flugphasen analytisch ermittelt. Die Resultate sind aufgetragen durch einen Plotter in den Fig. 7 und 8 für zwei Beispiele wiedergegeben, wobei im Falle der Fig. 7 die Horizontal-Eigengeschwindigkeit $v_e \approx$ 32 m/s und bei den der Fig. 8 zugrundeliegenden Messungen eine Horizontal-Eigengeschwindigkeit von $v_e$ $\approx$ 56 m/s betrug.

Aus der Gesamtheit der Testflüge ließ sich eine empirische Standardabweichung von 1,1 m/s bzw. von 2,2 m/s bei 95 % Sicherheitswahrscheinlichkeit ermitteln. Die Ergebnisse zeigen, daß sich mit Hilfe des erfindungsgemäßen Verfahrens die Horizontal-Eigengeschwindigkeit $v_e$ von Hubschraubern auch in höheren Geschwindigkeitsbereichen aus der rechnerischen Verarbeitung von nur zwei Meßwerten bestimmen läßt.

**Ansprüche**

1. Verfahren zur Bestimmung der Horizontal-Eigengeschwindigkeit $v_e$ von Hubschraubern in Geschwindigkeitsbereichen $v_e > 20$ m/s,
   **gekennzeichnet durch** folgende Verfahrensschritte:
   - es werden die Werte des Nickwinkels ($\theta$) und des Längssteuers ($\delta x$) durch Meßwertaufnehmer erfaßt;
   - aus den Werten des Nickwinkels ($\theta$) und des Längssteuers ($\delta x$) werden durch Verknüpfung mit zuvor ermittelten und gespeicherten Kalibrationsgleichungen für den Funktionszusammenhang von Eigengeschwindigkeit und Nickwinkel bzw. Längssteuer bei quasi stationärem Flug in praktisch vorkommenden Geschwindigkeitsbereichen Signale ($v_\theta$ und $v_{\delta x}$) errechnet, die jeweils ein Maß für die Geschwindigkeit darstelleu;
   - die Signale ($v_\theta$ und $v_{\delta x}$) werden je für sich gefiltert zu Signalen ($\overline{v\theta}$ und $\overline{v}_{\delta x}$);
   - die gefilterten Signale ($\overline{v}_\theta$ und $\overline{v}_{\delta x}$) werden durch zuvor ermittelter und gespeicherter, aufgrund der Meßaufnehmer bestimmten Gewichtungsfaktoren ($k_\theta$ und $k_{\delta x}$) in gewichtete Signale ($\overline{v}_\theta$ und $\overline{v}_{\delta x}$) umgesetzt und
   - aus den gewichteten Signalen ($\overline{v}_\theta$ und $\overline{v}_{\delta x}$) wird durch gewogene Mittelwertbildung entsprechend der Beziehung

$$v_e = \frac{\overline{\overline{v}}_\Theta + \overline{\overline{v}}_{\delta x}}{k_\Theta + k_{\delta x}}$$

ein die Horizontal-Eigengeschwindigkeit repräsentierendes Signal bestimmt.

2. Verfahren nach Anspruch 1, **dadurch gekennzeichnet,** daß das Eigengeschwindigkeitssignal ($v_e$) durch Filterung in ein Signal ($\overline{v}_e$) umgesetzt wird.

3. Verfahren nach Anspruch 1 oder 2, **dadurch gekennzeichnet,** daß das Nickwinkelsignal ($\theta$) durch ein Trägheitsnavigationssystem bereitgestellt wird.

4. Verfahren nach einem der Ansprüche 1 bis 3, **dadurch gekennzeichnet,** daß das Längssteuersignal ($\delta x$) über ein mit dem Pilotensteuerhebel gekoppeltes Potentiometer erzeugt wird.

**Claims**

1. Method for determining the horizontal airspeed $v_e$ of helicopters in velocity ranges $v_e >$ m/s,

characterised by the following steps of the method:

- the values of the pitch angle ($\theta$) and the longitudinal control ($\delta x$) are recorded by measured value sensors; signals ($\theta$) and ($\delta x$), which each represent a measure of the velocity, are calculated from the values of the pitch angle ($\theta$) and the longitudinal control ($\delta x$) by association with previously determined and stored calibration equations for the functional relationship between the airspeed and the pitch angle or longitudinal control during quasi-steady state flight in the velocity ranges occurring in practice;
- the signals ($v_\theta$ and $v_{\delta x}$) are respectively filtered to signals ($\bar{v}_\theta$ and $\bar{v}_{\delta x}$);
- the filtered signals ($\bar{v}_\theta$ and $\bar{v}_{\delta x}$) are converted into weighted signals ($\bar{v}_\theta$ and $\bar{v}_{\delta x}$) by means of previously determined and stored weighting factors ($k_\theta$ and $k_{\delta x}$) determined on the basis of the measurement sensors, and
- a signal representing the horizontal airspeed is determined from the weighted signals ($\bar{v}_\theta$ and $\bar{v}_{\delta x}$) by means of the formation of a weighted mean value in accordance with the relationship

$$v_e = \frac{\bar{\bar{v}}_\theta + \bar{\bar{v}}_{\delta x}}{k_\theta + k_{\delta x}}$$

2. Method according to Claim 1, characterised in that the airspeed signal ($v_e$) is converted by filtering into a signal ($\bar{v}_e$).

3. Method according to Claim 1 or 2, characterised in that the pitch angle signal ($\theta$) is provided by an inertial navigation system.

4. Method according to any of Claims 1 to 3, characterised in that the longitudinal control signal ($\delta x$) is generated by a potentiometer connected to the pilot's control lever.


**Revendications**

1. Procédé pour la détermination de la vitesse horizontale propre $v_e$ d'un hélicoptère dans le domaine des vitesses élevées $v_e > 20$ m/s, **caractérisé par** les étapes suivantes :
   - les valeurs de l'angle de tangage ($\theta$) et de la commande longitudinale ($\delta x$) sont déterminées Par des capteurs de mesure;
   - à partir de l'angle de tangage ($\theta$) et de la commande longitudinale ($\delta x$), on calcule, par combinaison avec des équations de calibrage préalablement déterminées et mémorisées pour les relations fonctionnelles entre la vitesse propre et l'angle de tangage et respectivement la commande longitudinale, en vol quasi stationnaire et dans des domaines de vitesses rencontrés dans la pratique, des signaux ($v_\theta$ et $v_{\delta x}$) qui représentent respectivement un critère pour la vitesse;
   - les signaux ($v_\theta$ et $v_{\delta x}$) sont filtrés séparément en signaux ($\bar{v}_\theta$ et $\bar{v}_{\delta x}$);
   - les signaux filtrés ($\bar{v}_\theta$ et $\bar{v}_{\delta x}$) sont transformés, par des facteurs de pondération ($k_\theta$ et $k_{\delta x}$) déterminés et mémorisés préalablement sur la base des signaux déterminés par les capteurs de mesure, en signaux pondérés ($\bar{v}_\theta$ et $\bar{v}_{\delta x}$), et
   - un signal représentant la vitesse horizontale propre est déterminé à partir des signaux pondérés ($\bar{v}_\theta$ et $\bar{v}_{\delta x}$) par la formation de la moyenne pondérée, conformément à la relation

$$v_e = \frac{\bar{\bar{v}}_\theta + \bar{\bar{v}}_{\delta x}}{k_\theta + k_{\delta x}} \quad .$$

2. Procédé selon la revendication 1, caractérisé en ce que la signal de vitesse propre ($v_e$) est transformé par filtrage en un signal ($\bar{v}_e$).

3. Procédé selon l'une des revendications 1 ou 2, caractérisé en ce que le signal d'angle de tangage ($\theta$) est fourni par un système de navigation inertielle.

4. Procédé selon l'une des revendications 1 à 3, caractérisé en ce que le signal de commande longitudinale ($\delta x$) est généré par l'intermédiaire d'un potentiomètre couplé avec le manche à balai du pilote.

FIG.1

FIG.2

FIG.3

FIG.4

# FIG. 5

# FIG. 6

# FIG .7

2.40E+01  2.60E+01  2.80E+01  3.00E+01  3.20E+01  3.40E+01  3.60E+01   v (m/s)

t(s)

Legend:
— = Schätzsignal $\bar{v}_e$
--- = Referenzsignal
-·-· = $\bar{v}_\theta$
-··- = $\bar{\bar{v}}_{\delta x}$

# FIG.8

Legend:
- — = Schätzsignal $\bar{v}_e$
- ---- = Referenzsignal
- -·-· = $\bar{\bar{v}}_\theta$
- -··- = $\bar{\bar{v}}_{\delta x}$